# EUROPEAN PATENT APPLICATION

(11) **EP 1 675 029 A2**
(43) Date of publication of application: **28.06.2006**
(21) Application number: 05028043.7
(22) Date of filing: 21.12.2005
(51) Int. Cl.: G06F 21/00

(54) **Method and apparatus for preventing hacking of subscriber identification module in a mobile communication terminal**

(30) Priority: 22.12.2004 KR 2004110195
(71) Applicant: LG Electronics Inc., Yongdungpo-gu Seoul (KR)
(72) Inventor: Lee, Jae Woong, Incheon-si (KR)
(74) Representative: Katérle, Axel

(57) **Abstract**

An apparatus and method of preventing hacking of a subscriber identification module in a mobile communication terminal are disclosed. Hacking is prevented by storing a secret code in a hidden area of a writable non-volatile memory area and initializing a processor of the mobile communication terminal if the secret code matches a specified code.

## Description

This application claims the benefit of the Korean Patent Application No. 10-2004-0110195, filed on December 22, 2004, which is hereby incorporated by reference as if fully set forth herein.

### BACKGROUND OF THE INVENTION

### Field of the Invention

The present invention relates to preventing hacking of a mobile communication terminal lock algorithm, and more particularly, to a method and apparatus for preventing hacking of a subscriber identification module (SIM) in a mobile communication terminal. Although the present invention is suitable for a wide scope of applications, it is particularly suitable for preventing hacking of or entirely erasing a SIM-lock-applied code implemented in order to facilitate use of a SIM card of a specific communication service provider and to prevent downloading a previous code, to which an SIM lock is not applied.

### Description of the Related Art

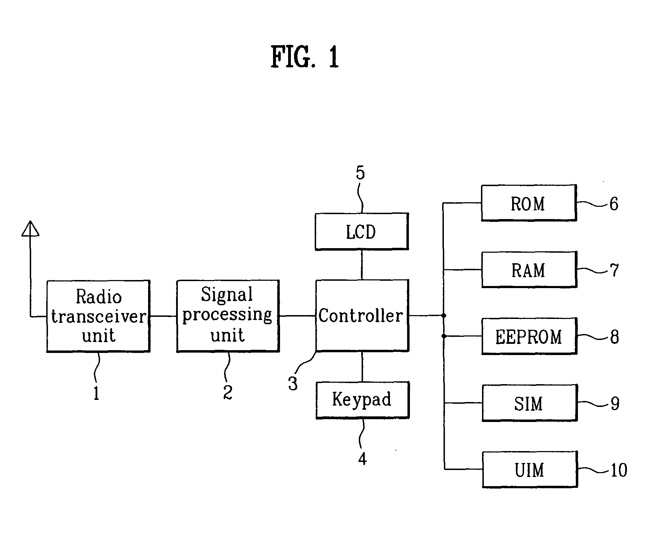

FIG. 1 is a block diagram of a mobile communication terminal. As illustrated in FIG. 1, the mobile communication terminal includes a radio transceiver unit 1, a signal processing unit 2, a controller 3, a keypad 4, an LCD 5, a ROM 6, a RAM 7, an EEPROM 8, a subscriber identity module (SIM) 9 and a user identity module (UIM) 10.

The SIM 9 is a small print circuit board inserted in a mobile communication terminal, such as a mobile phone, when applying a subscription and is used in global system for mobile communications (GSM). The SIM 9 may include detailed subscriber information, security information and a memory for a personal phonebook. The SIM 9 may also include a microchip facilitating storage of the information and encryption of voice and data transmission to prevent wiretapping of communications. The SIM 9 may also store data enabling verification of a caller's identification by a network service provider.

The UIM 10 is a memory for storing user data to be adopted by International Mobile Telecommunications (IMT-2000). Data not belonging to the data information stored in the SIM 9 or UIM 10, such as an encryption algorithm of the SIM 9, is excluded from user data area and cannot be downloaded.

The ROM 5 is a memory storing a program to be executed. The RAM 7 is a memory for storing data received from a system.

Generally, in GSM for European wireless mobile phones, a charge is collected at a predetermined rate when receiving a call as well as when making a call. Therefore, a lock is needed in order to not receive specific phone calls as well as to prevent unauthorized use or theft. There are various kinds of locks.

For example, when a terminal is powered-on, a phone lock enables the terminal to be used upon verification of a password only if a SIM is inserted in the terminal by locking the terminal. A SIM lock locks a specific terminal by retaining information of the specific terminal and information of a specific SIM card together.

In a SIM lock system, a lock check process is not carried out if a SIM card having the SIM lock is inserted in the terminal. If a different SIM card is inserted in the terminal, the lock check process is carried out. In the lock check process, a password must be input to unlock the SIM lock. After the SIM lock has been unlocked once using the password, the lock check process is not carried out even if another type of SIM card is inserted in the terminal.

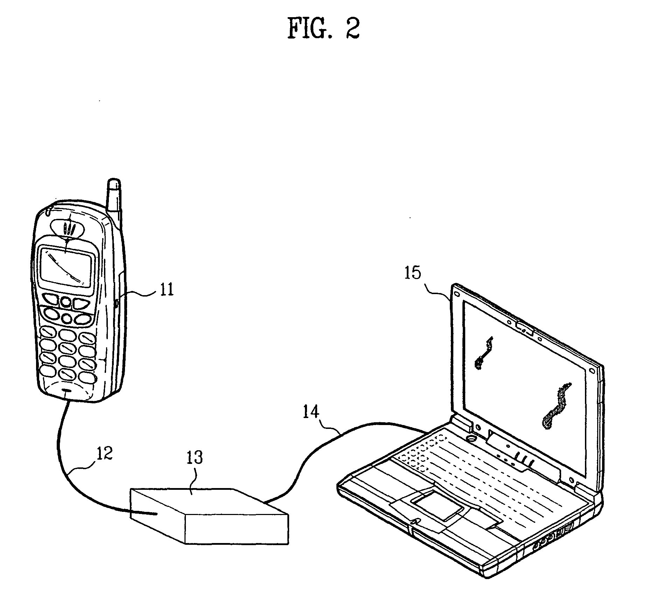

FIG. 2 illustrates an interface to implement a SIM lock in a device. As illustrated in FIG. 2, a jig 13 is provided between a terminal 11 and a computer 15 having a control program. The jig 13 is connected to the terminal 11 via a first serial cable 12 and connected to the computer 15 via a second serial cable 14.

A basic algorithm of the SIM lock according to the interface illustrated in FIG. 2 includes downloading a source with a SIM lock function to the terminal 11, inputting a SIM unlock code according to a manufactured serial number to the terminal 11 via a first specific AT command during mass production, and enabling the SIM lock function via a second specific AT command. A terminal having the SIM lock function enabled according to the algorithm is activated only if a SIM card of a specific communication provider is loaded. If a SIM card of a different service provider is loaded, the SIM lock function is enabled so that the terminal operates in a restricted mode only.

To disable the SIM lock function, the SIM unlock code input during mass production must to be re-inputted. The SIM unlock code is stored in a boot area of a writable non-volatile memory. A code input during mass production is encrypted together with a seed key, which is a specific number combined with a password, within a terminal source. Since the stored are is the boot area, the SIM lock function is enabled by retaining the value even if a new source is downloaded after erasing the contents of the non-volatile memory, which stores, for example, a user's software upgrade and a patch file execution.

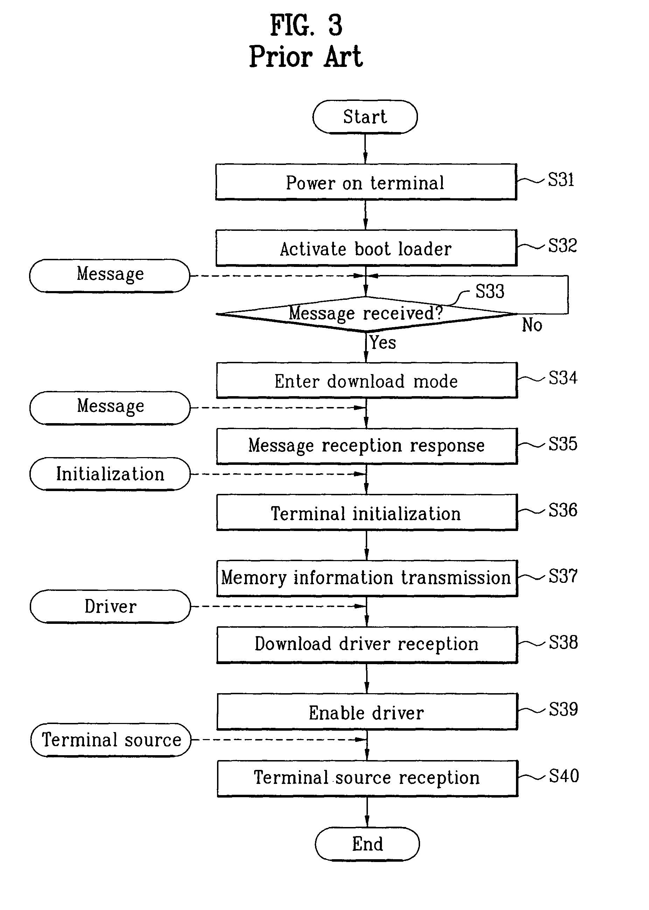

A downloaded may be performed according to the flowchart illustrated in FIG. 3. The following description of FIG. 3 is focused on an operation within the terminal. Since the operation proceeds with mutual communications between the control program within the computer 15 and a boot loader within the terminal 11, interconnection with the control program will be explained as well.

As illustrated in FIG. 3, when power is applied to the terminal (S31), the boot loader within the terminal is activated (S32). If a message is received from a control program in a computer connected to the terminal via a serial cable (S33), the terminal is switched to a download mode (S34) and a corresponding response is generated (S35). The control program receives the response, delivers a basic initialization command for the terminal, and executes a terminal initialization (S36).

After completion of the initialization, the boot loader transmits information from a current memory to the control program (S37). The control program receives the transmitted information and transmits a temporary driver, which is loaded in the non-volatile memory (RAM) of the terminal in order to execute a download to the terminal. The boot loader of the terminal receives the download driver (S38), loads the received driver in RAM, and enables the driver (S39).

The control program downloads a terminal source using a flash command suitable for the terminal memory. The boot loader stores the data received via the serial cable in a real memory of the terminal (S40).

However, the conventional method cannot solve the problem of a dead copy. Even if the SIM lock function of the terminal is enabled, a hacker familiar with the characteristics of the writable non-volatile memory can still use the terminal by erasing the SIM lock source entirely, including the boot area, and downloading a previous code to which the SIM lock is not applied.

Therefore, there is a need for a method and apparatus to prevent hacking of a SIM in a mobile communication terminal by erasing the SIM lock source entirely and downloading a previous code to which the SIM lock is not applied. The present invention addresses these and other needs.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

The invention is directed to provide a method and apparatus for preventing hacking of a subscriber identification module (SIM) in a mobile communication terminal. By storing a secret code related to a SIM lock in a hidden portion of memory that cannot be altered, hacking of the SIM by erasing the SIM lock source entirely and downloading a previous non-SIM locked code is prevented

In one aspect of the present invention, a method of preventing hacking of a subscriber identification module (SIM) in a mobile communication terminal is provided. The method includes storing a secret code in a hidden area of non-volatile memory, the hidden area readable only and initializing a processor of the mobile communication terminal if an entered code matches the stored secret code.

It is contemplated that the secret code has a predetermined size. Preferably, the predetermined size is 1-byte.

It is contemplated that storing the secret code includes writing the secret code to the hidden area using a first specific command and locking the hidden area using a second specific command such that the hidden area cannot be altered. It is further contemplated that the secret code is stored in the hidden area during a manufacturing process. Preferably, the hidden area is a one-time programmable (OTP) register.

In another aspect of the present invention, a method of preventing hacking of a subscriber identification module (SIM) in a mobile communication terminal is provided. The method includes executing a boot loader function upon applying power to the mobile communication terminal, processing a command to access a hidden area of non-volatile memory, the hidden area readable only and containing a pre-stored secret code, reading the secret code from the hidden area, comparing the secret code to a specific code, initializing a processor of the mobile communication terminal and informing a control computer connected to the mobile communication terminal that a SIM lock function exists if the read secret code matches the specific code.

It is contemplated that the method includes informing the control computer that the SIM lock function does not exist if the read secret code does not match the specific code. It is further contemplated that the method includes determining whether the hidden area has been entered.

It is contemplated that the secret code has a predetermined size. Preferably, the predetermined size is 1-byte.

It is contemplated that he method includes writing the secret code to the hidden area using a first specific command and locking the hidden area using a second specific command such that the hidden area cannot be altered. Preferably, the hidden area is a one-time programmable (OTP) register.

In another aspect of the present invention, a mobile communication terminal for preventing hacking of a subscriber identification module (SIM) is provided. The mobile communication terminal includes a non-volatile memory type SIM adapted to store a secret code in a hidden area, the hidden area readable only after the secret code has been stored and a control unit adapted to read the secret code from the hidden area, compare the secret code to a specific code and output an operational control signal upon power-up of the mobile communication terminal if the read secret code matches the specific code.

It is contemplated that the control unit is adapted to perform a program stored in a boot ROM in order to compare the secret code to the specific code. It is further contemplated that the SIM is adapted to store the secret code in the hidden area in response to a first specific command and lock the hidden area in response to a second specific command such that the hidden area cannot be altered.

It is contemplated that the control unit is adapted to inform a control computer connected to the mobile communication terminal that a SIM lock function exists if the read secret code matches the specific code. It is further contemplated that the control unit is adapted to inform the control computer that the SIM lock function does not exist if the read secret code does not match the specific code.

It is contemplated that the control unit is adapted to determine whether the hidden area has been entered. Preferably, the hidden area is a one-time programmable (OTP) register and the secret code has a predetermined size.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 illustrates a block diagram of a mobile communication terminal.

FIG. 2 illustrates interfaces of a device to implement a SIM lock.

FIG. 3 illustrates a flowchart of a conventional download process.

FIG. 4 illustrates a flowchart of an operating process of a boot loader within a terminal according to the present invention.

FIG. 5 illustrates operational relationships between a computer control program and a main controller within a terminal according to the present invention.

### DETAILED DESCRIPTION OF THE PREFERRED EMBODIMENTS

The present invention relates to a method and apparatus for preventing hacking of a subscriber identification module (SIM) in a mobile communication terminal.
Although the present invention is illustrated with respect to a mobile communication terminal having a SIM function, it is contemplated that the present invention may be utilized anytime it is desired to protect a security-related function in a communication device.

Reference will now be made in detail to the preferred embodiments of the present invention, examples of which are illustrated in the accompanying drawings. Wherever possible, the same reference numbers will be used throughout the drawings to refer to the same or like parts.

A method of preventing a hacking of an SIM card in a mobile communication terminal according to the present invention is explained with reference to the attached drawings. The operational principle of the SIM lock function has been explained in the foregoing description, and, firmware of a main controller of a mobile communication terminal is primarily explained in the following description. A basic SIM lock algorithm of a method for preventing hacking according to the present invention is maintained but a boot loader within the main controller of the terminal may be changed.

A basic feature of the present invention is to use a hidden area of a writable non-volatile memory. The hidden area of the writable non-volatile memory is logically located at the same address of a boot area but is physically different from the boot area. Furthermore, the hidden area can be entered or left using a specific command. Moreover, once a lock is enabled, it is a physical locking such that the locked area is readable only and cannot be written.

Due to the characteristics of the hidden area, it is used as a place for storing important values that should not be changed. Therefore, the present invention utilizes these characteristics to prevent hacking. Specifically, a secret code is stored in the hidden area during mass production in order to protect SIM lock information.

The secret code is a code checked by a boot loader and may include one byte. The secret code may be written to the hidden area using a specific command. After the secret code has been written to the hidden area, the hidden area is locked using a specific command. Once the hidden area is locked, the contents of the corresponding area cannot be altered.

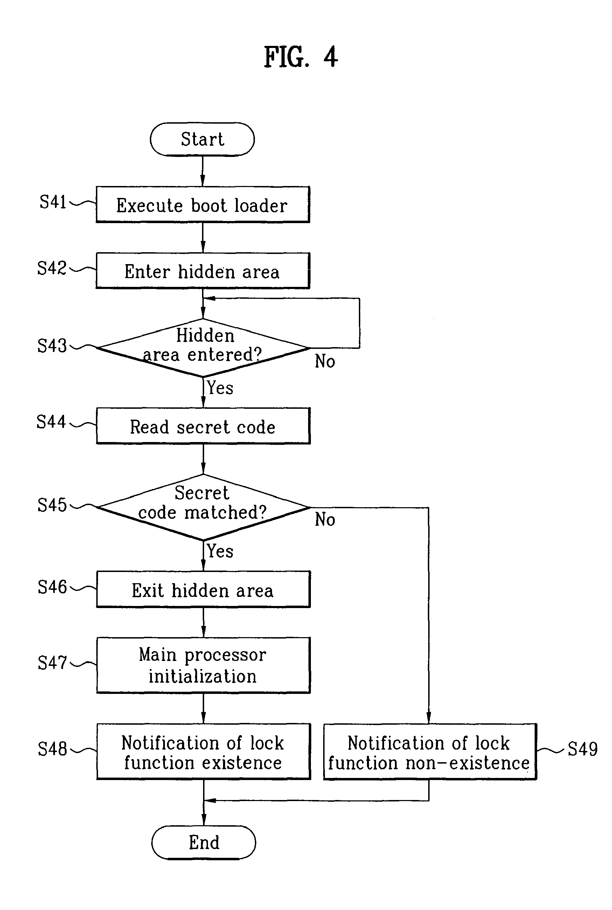

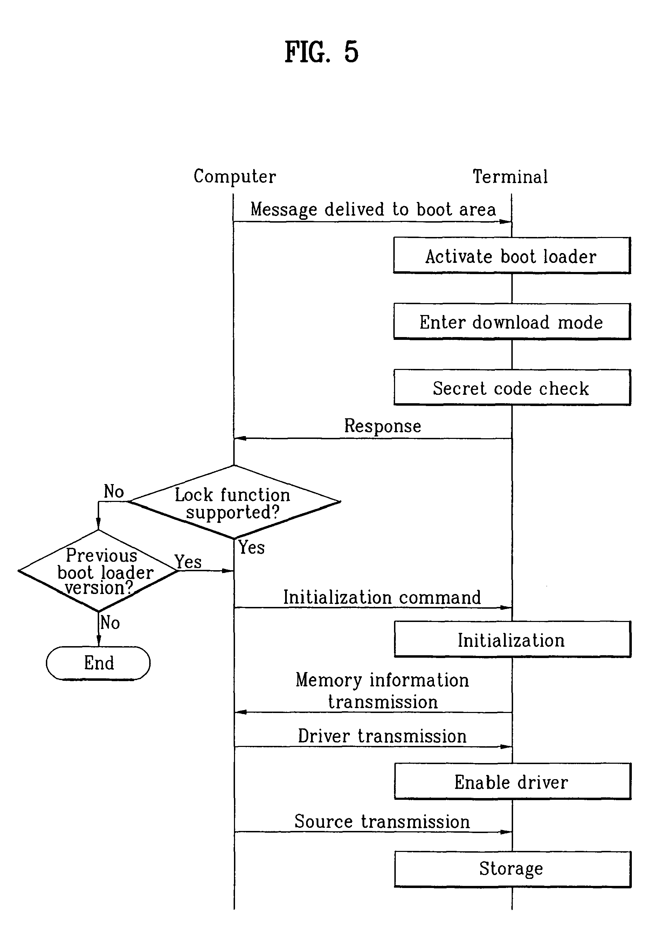

FIG. 4 illustrates a flowchart of an operating process of a boot loader within a terminal according to the present invention and FIG. 5 illustrates operational relationships between a computer control program and a main controller within a terminal according to the present invention.

As illustrated in FIG. 4, if a message is delivered to a boot area of a terminal from a control program of a computer, a boot loader is executed (S41). The terminal is switched to a download mode and a hidden area is entered. In order to enter the hidden area, a command is implemented by the control program of the computer connected to the terminal via a serial cable (S42).

It is then determined whether the hidden area has been entered (S43). Whether the hidden area has been entered may be confirmed using an 'ID read command' of the writable non-volatile memory. An address at which a secret code was stored during mass production is accessed to read the secret code (S44). The secret code has a prescribed size, preferably 1-byte.

It is determined whether the secret code matches a specific code (S45). If there exists no secret code or if the secret code does not match the specific code, the control program is notified that there is no SIM lock function (S49). If the secret code matches the specific code, the control program is notified that the SIM lock function exists (S48).

If the SIM lock function is applied to a source, the corresponding information is mapped to a specific address. For example, a value of '0x5555' may be written at an address '0x20000' through memory allocation. This is to indicate whether a current source supports the SIM lock function.

In the control program, a response received from the terminal determines the next step in the process. Specifically, if the terminal supports the lock function or if a previous boot loader version exists, an initialization command is transmitted. If there is no lock function and there is no previous boot loader version, no command is transmitted.

Subsequently, the memory is initialized (S47) after the hidden area is exited (S46). The terminal transmits memory information to the control program.

The control program of the computer, having received the memory information from the terminal, then transmits a driver to the terminal. The terminal enables the driver transmitted from the control program of the computer.

The driver, which is a program for erasing the writable non-volatile memory or downloading a new code, is loaded in RAM. The erasing/downloading program is configured to check changed items of the source by reading the writable non-volatile memory, preferably prior to a download.

In the given example, the erasing/downloading program checks whether '0x5555' is written at address '0x20000'. If a specific value is stored at the specific address, a corresponding process is performed. Otherwise, the corresponding process terminates and it is determined that a download for hacking is attempted. Accordingly, the present invention utilizes the physical security area, thereby preventing hacking by erasing the writable non-volatile memory entirely and downloading the previous code.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

In the claims, means-plus-function clauses are intended to cover the structure described herein as performing the recited function and not only structural equivalents but also equivalent structures.

## Claims

1. A method of preventing hacking of a subscriber identification module (SIM) in a mobile communication terminal, the method comprising:
storing a secret code in a hidden area of non-volatile memory, the hidden area readable only; and
initializing a processor of the mobile communication terminal if the stored secret code matches a specific code.

2. The method of claim 1, wherein the secret code has a predetermined size.

3. The method of claim 2, wherein the predetermined size is 1-byte.

4. The method of claim 1, wherein storing the secret code comprises:
writing the secret code to the hidden area using a first specific command; and
locking the hidden area using a second specific command such that the hidden area cannot be altered.

5. The method of claim 4, wherein the hidden area is a one-time programmable (OTP) register.

6. The method of claim 1, wherein the secret code is stored in the hidden area during a manufacturing process.

7. A method of preventing hacking of a subscriber identification module (SIM) in a mobile communication terminal, the method comprising:
executing a boot loader function upon applying power to the mobile communication terminal;
processing a command to access a hidden area of non-volatile memory, the hidden area readable only and containing a pre-stored secret code;
reading the secret code from the hidden area;
comparing the secret code to a specific code; and
initializing a processor of the mobile communication terminal and informing a control computer connected to the mobile communication terminal that a SIM lock function exists if the read secret code matches the specific code.

8. The method of claim 7, further comprising informing the control computer that the SIM lock function does not exist if the read secret code does not match the specific code.

9. The method of claim 7, further comprising determining whether the hidden area has been entered.

10. The method of claim 7, wherein the secret code has a predetermined size.

11. The method of claim 10, wherein the predetermined size is 1-byte.

12. The method of claim 7, further comprising:
writing the secret code to the hidden area using a first specific command; and
locking the hidden area using a second specific command such that the hidden area cannot be altered.

13. The method of claim 12, wherein the hidden area is a one-time programmable (OTP) register.

14. A mobile communication terminal for preventing hacking of a subscriber identification module (SIM), the mobile communication terminal comprising:
a non-volatile memory type SIM adapted to store a secret code in a hidden area, the hidden area readable only after the secret code has been stored; and
a control unit adapted to read the secret code from the hidden area, compare the secret code to a specific code and output an operational control signal upon power-up of the mobile communication terminal if the read secret code matches the specific code.

15. The mobile communication terminal of claim 14, wherein the control unit is further adapted to perform a program stored in a boot ROM in order to compare the secret code to the specific code.

16. The mobile communication terminal of claim 14, wherein the SIM is further adapted to:
store the secret code in the hidden area in response to a first specific command; and
lock the hidden area in response to a second specific command such that the hidden area cannot be altered.

17. The mobile communication terminal of claim 14, wherein the control unit is further adapted to inform a control computer connected to the mobile communication terminal that a SIM lock function exists if the read secret code matches the specific code.

18. The mobile communication terminal of claim 17, wherein the control unit is further adapted to inform the control computer that the SIM lock function does not exist if the read secret code does not match the specific code.

19. The mobile communication terminal of claim 14, wherein the control unit is further adapted to determine whether the hidden area has been entered.

20. The method of claim 14, wherein the hidden area is a one-time programmable (OTP) register and the secret code has a predetermined size.
